# FASCICULE DE BREVET EUROPEEN

(11) **EP 0 530 091 B1**
(45) Date de publication et mention de la délivrance du brevet: **08.05.1996**
(21) Numéro de dépôt: 92402331.0
(22) Date de dépôt: 24.08.1992
(51) Int. Cl.: H04N 5/57

(54) **Dispositif d'asservissement de la tension de blocage d'un tube cathodique par mesure de luminance**
Sperrspannungregelkreis für Kathodenstrahlröhre mit Luminanzmessung
Blocking voltage control loop for cathode ray tube by luminance measurement

(30) Priorité: 30.08.1991 FR 9110800
(43) Date de publication de la demande: 03.03.1993
(73) Titulaire: SEXTANT AVIONIQUE, F-92360 Meudon-la-Forêt (FR)
(72) Inventeur: Giraud, André, F-75116 Paris (FR); Huillet, Henri, F-75116 Paris (FR)
(74) Mandataire: Ballot, Paul Denis Jacques

(56) Documents cités:
- WO-A-84/03174
- FR-A- 2 100 454
- GB-A- 1 552 608
- GB-A- 1 585 063
- US-A- 2 556 455
- PATENT ABSTRACTS OF JAPAN vol. 9, no. 150 (E-324)(1873) 25 Juin 1985 JP-A-60029091 (AROKA) 14 fev. 1985
- PATENT ABSTRACTS OF JAPAN vol. 8, no. 123 (E-249)(1560) 8 Juin 1984 & JP-A-59034788 (SONY) 25 fev.1984
- PATENT ABSTRACTS OF JAPAN vol. 9, no. 123 (E-317)28 Mai 1985 & JP-A- 60010547 (SONY) 19 jan. 1985

## Description

L'invention concerne les tubes à rayons cathodiques et, plus particulièrement, un dispositif pour asservir la tension de polarisation cathode-wehnelt sur la tension de blocage d'un tube cathodique en fonction de la luminance mesurée sur l'écran du tube.

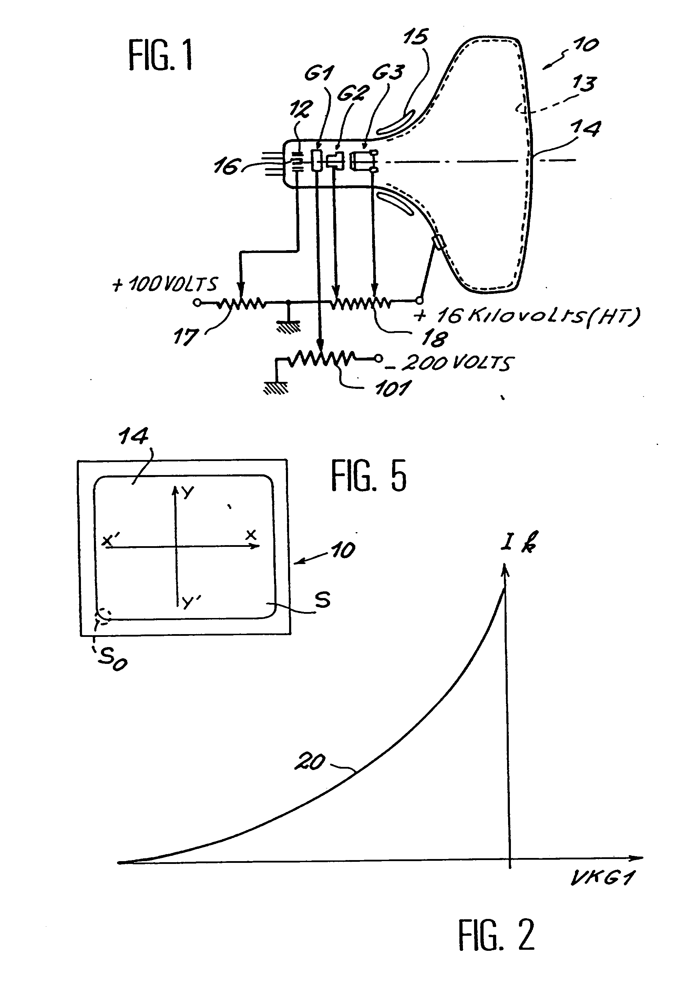

Un tube à rayons cathodiques 10 (figure 1) comprend dans une enceinte sous vide 11 une cathode 12 comportant un filament chauffé 16 qui émet des électrons et une anode 13 qui est portée par l'intermédiaire d'une borne 19 à un potentiel positif élevé (HT) par rapport au potentiel VK de la cathode de manière à attirer les électrons vers une surface 14 qui constitue l'écran du tube cathodique. La paroi interne de l'écran est revêtue de luminophores qui s'illuminent lorsqu'ils reçoivent les électrons émis par la cathode, ce qui permet de faire apparaître des figures lumineuses sur la paroi externe de l'écran en déviant la trajectoire des électrons à l'aide notamment de champs magnétiques variables fournis par des bobines de déviation 15.

Afin de mieux contrôler la trajectoire des électrons et de moduler l'intensité du faisceau d'électrons, les électrons émis par la cathode 12 traversent une structure constituée de trois électrodes ou grilles G1, G2 et G3 qui sont portées à des potentiels appropriés à leur rôle. C'est ainsi que la grille G1, plus connue sous le nom de wehnelt, est disposée à proximité de la cathode et est à un potentiel négatif VG1 par rapport à celle-ci de manière à pouvoir arrêter ou laisser passer les électrons en direction de l'écran. La grille G2, dite d'accélération, est placée à proximité de la grille G1 en direction de l'écran et est à un potentiel positif VG2 par rapport à la cathode. Enfin, la grille G3, dite de focalisation, est placée avant les bobines de déviation 15 et est à un potentiel positif VG3 par rapport à la cathode.

Sur la figure 1, les potentiels des différentes électrodes sont obtenus schématiquement par des potentiomètres 17, 18, et 101. Le potentiomètre 17 est connecté entre une borne à + 100 volts par exemple et une borne reliée à la masse. Le potentiomètre 18 est connecté entre la masse et la haute tension (HT) de 16 kilovolts par exemple. Le potentiomètre 101 est connecté entre la masse et un potentiel de -200 volts.

La cathode 12 est connectée à la borne de sortie du potentiomètre 17 et son potentiel VK peut donc varier de 0 à + 100 volts. Le whenelt G1 est connecté à la borne de sortie du potentiomètre 101 et son potentiel VG1 peut donc varier de 0 à -200 volts. La grille accélératrice G2 est connectée à une première borne de sortie du potentiomètre 18 et son potentiel VG2 peut donc varier de 0 à quelques milliers de volts. La grille de focalisation G3 est connectée à une deuxième borne de sortie du potentiomètre 18 et son potentiel VG3 peut donc atteindre plusieurs milliers de volts. On comprend que l'on peut moduler l'intensité du faisceau d'électrons et donc celle du point lumineux sur l'écran en modifiant la tension VKG1. A cet effet, la grille G1 est polarisée à une tension Vco, dite de blocage, et une tension de modulation variable lui est appliquée pour obtenir un courant électronique de faisceau variable et donc une luminance variable du point lumineux sur l'écran.

La tension de blocage Vco, plus connue sous le nom de "tension de cut-off", correspond à la différence de potentiels VKG1 juste suffisante pour empêcher le passage des électrons en direction de l'écran.

La figure 2 est un diagramme montrant la variation du courant de cathode Ik, qui correspond sensiblement à la luminance du point sur l'écran, en fonction de la tension VKG1 entre la cathode et la grille G1. La courbe 20, qui est quasi-logarithmique, montre que le courant Ik est nul pour VKG1=Vco et qu'il atteint la valeur Iko pour VKG1=0.

Pour obtenir une caractéristique linéaire entre le signal appliqué à la grille G1 et la luminance sur l'écran, il est nécessaire, d'une part, de linéariser la courbe 20 et, d'autre part, de maintenir le tube cathodique à sa tension de blocage en l'absence d'un signal de modulation, ce maintien étant d'autant plus critique que le tube fonctionne à des valeurs faibles de la luminance, fonctionnement que l'on rencontre lorsque le tube cathodique est utilisé dans un environnement sombre.

Pour garantir la stabilité de la luminance à faible niveau, il est nécessaire :
- de toujours polariser le tube à sa tension de blocage;
- de garder stable la tension VKG2 entre la cathode et la grille accélératrice;
- de garder stable la puissance de chauffage de la cathode, c'est-à-dire de garantir une certaine précision et stabilité de la tension Vf qui est appliquée au filament de chauffage 16;
- de garder stable la différence de potentiels VKA entre la cathode et l'anode.

Pour résoudre ces problèmes, il a été proposé de polariser le tube avec des tensions VKG2, Vf et VKA aussi constantes que possible mais il est difficile de maintenir ces tensions avec une précision supérieure à 1%.

En outre, les caractéristiques du tube, notamment la tension de blocage, évoluent :
- pendant la stabilisation thermo-mécanique du canon à électrons, du démarrage, et
- en cours de vieillissement pendant la durée de vie du tube. Il en résulte que les tensions de polarisation devraient être réajustées au cours du temps.

Pour compenser ces dérives, il a été proposé des dispositifs d'asservissement de la tension de polarisation cathode-wehnelt du tube par mesure du courant de cathode. Cet asservissement s'effectue à intervalles réguliers, par exemple pendant le retour trame de l'image, et sa valeur est mémorisée pendant la trame suivante.

L'acquisition de la valeur d'asservissement s'effectue en deux étapes :
- une première étape pour appliquer sur la grille G1 une tension de surblocage (tension supérieure à la tension de blocage) et mesurer les courants de fuites de cathode. Cette mesure est soustraite de la mesure réalisée lors de la deuxième étape et permet de s'affranchir des courants de fuites;
- une deuxième étape pour appliquer sur le tube une faible tension de modulation de valeur connue et asservir le potentiel VKG1 de manière à mesurer un courant de cathode Ik qui est la somme des courants de fuites mesurés au cours de la première étape et d'un courant constant Iks correspondant à la valeur supposée qu'engendrerait la consigne de modulation appliquée.

Un tel procédé est satisfaisant lorsque la dynamique de courant de cathode est comprise entre 10 microampères et 2 milliampères ce qui correspond à des courants Iks d'asservissement qui conviennent lorsque l'ambiance lumineuse minimale est une ambiance dite de "salon", ce qui est le cas des téléviseurs grand public.

Lorsque le tube est disposé dans un environnement très sombre et/ou lorsqu'il est très sensible (rendement élevé des luminophores), l'asservissement doit être effectué à des courants de cathode très inférieurs au microampère, ce qui est difficilement réalisable à cause des valeurs des résistances d'isolement et des capacités parasites inter-électrodes.

En outre, ce procédé de l'art antérieur ne tient pas compte de la variation de la sensibilité des luminophores, c'est-à-dire leur rendement lumineux, au cours du temps.

D'autres dispositifs, dont celui décrit dans le brevet français publié sous le numéro 2 100 454, ont été imaginés qui utilisent un photodétecteur placé devant ou couplé optiquement à une partie non habituellement utilisée de l'écran. A cause des performances demandées à l'écran, le phosphore unique qui est utilisé possède en général un temps de réponse assez long de plusieurs millisecondes au moins.

Par conséquent, si l'on veut obtenir un signal électrique d'amplitude représentatif de la luminance du phosphore il faudra maintenir l'impulsion de test aussi longtemps.

Pour les applications où il est acceptable d'interrompre temporairement l'affichage de l'image pour procéder à l'opération de correction automatique de la tension de polarisation cathode-wehnelt du tube, le temps de montée du phosphore n'est pas gênant.

La particularité de l'invention est de remédier au problème du temps de montée du phosphore, parce qu'une suppression, même très occasionnelle, d'une trame de l'image affichée est considérée comme inacceptable dans beaucoup d'applications.

Le but de la présente invention est donc de réaliser un dispositif d'asservissement de la tension de polarisation cathode-vehnelt sur la tension de blocage d'un tube cathodique qui permet de fonctionner à très basse luminance tout en s'affranchissant du vieillissement et des dérives temporelles des caractéristiques du tube cathodique.

L'invention concerne un dispositif d'asservissement de la tension de polarisation cathode-wehnelt sur la tension de blocage d'un tube à rayons cathodiques dont l'écran présente au moins une première zone opérationnelle du tube utilisée pour faire apparaître les images et une deuxième zone disposée à l'extérieur de la première, ledit dispositif comprenant un capteur de luminance qui est disposée face à la deuxième zone pour mesurer la luminance de la surface associée de la deuxième zone, des moyens de balayage pour diriger à chaque retour de trame le faisceau électronique vers ladite deuxième zone associée au capteur et des moyens pour modifier la tension de polarisation cathode-wehnelt du tube en fonction de la valeur de la mesure de luminance par rapport à une valeur souhaitée, caractérisé en ce que le luminophore recouvrant la deuxième zone présente un temps de montée à 99 % qui est inférieur, d'au moins un ordre de grandeur, à celui du luminophore recouvrant la première zone.

De préférence, ce temps de montée à 99 % est de l'ordre de quelques microsecondes pour le luminophore de la deuxième zone alors qu'il est de l'ordre de quelques millisecondes pour le luminophore de la première zone.

D'autres buts, caractéristiques et avantages de la présente invention apparaîtront à la lecture de la description suivante d'un exemple particulier de réalisation, ladite description étant faite en relation avec les dessins joints dans lesquels :
- la figure 1 est un schéma d'un tube à rayons cathodiques auquel s'applique la présente invention ;
- la figure 2 est un diagramme montrant la courbe de variation du courant de cathode du tube en fonction de la tension appliquée au wehnelt,
- la figure 3 est un schéma fonctionnel d'un dispositif d'asservissement automatique de la tension de polarisation cathode-wehnelt d'un tube à rayons cathodiques selon l'invention,
- les figures 4a, 4b et 4c sont des diagrammes de signaux utilisés dans le dispositif de la figure 3, et
- la figure 5 est une vue de face de l'écran 14 d'un tube à rayons cathodiques montrant une position possible du luminophore pour la mesure de luminance selon l'invention.

L'invention consiste à modifier le courant de cathode Ik en fonction de la mesure de la luminance d'un point de l'écran situé en dehors de la partie habituellement utilisée; de préférence, ce point de l'écran est réalisé avec un luminophore ayant des caractéristiques particulières qui seront définies ci-après.

A cet effet, l'écran 14 comporte (figure 5), en plus d'une surface utile S réalisée avec les luminophores habituels, une zone Sₒ réalisée avec un luminophore Lo ayant des caractéristiques adaptées à son rôle dans le dispositif selon l'invention. Cette zone Sₒ est située à la périphérie de l'écran et n'est normalement pas balayée par le faisceau électronique émis par la cathode pour réaliser une image opérationnelle.

Le luminophore Lo de la zone Sₒ est choisi selon les critères suivants :
- sa longueur d'onde doit être telle que tout rayonnement parasite visible vers la surface opérationnelle du tube est évité; de préférence, elle sera dans le domaine de l'infrarouge;
- son temps de montée à 99% doit être aussi court que possible pour que la durée de la phase de mesure de la luminance soit la plus courte possible; un temps de montée de l'ordre de quelques microsecondes est acceptable dans le cas d'une mesure pendant le retour de trame;
- son rendement énergétique doit être le plus élevé possible de manière à asservir le système au plus près de la tension de blocage.

On remarquera que le temps de montée à 99% du luminophore de la zone opérationnelle S est en général de l'ordre de quelques millisecondes, qui est à comparer avec le temps de montée de quelques microsecondes du luminophore Lₒ de la zone Sₒ. Il est recommandé que le temps de montée du luminophore Lₒ soit de préférence très inférieur à celui du luminophore de la zone S, d'au moins un ordre de grandeur (rapport 10) jusqu'à plusieurs ordres de grandeur dans l'exemple décrit ci-dessus (rapport 1000).

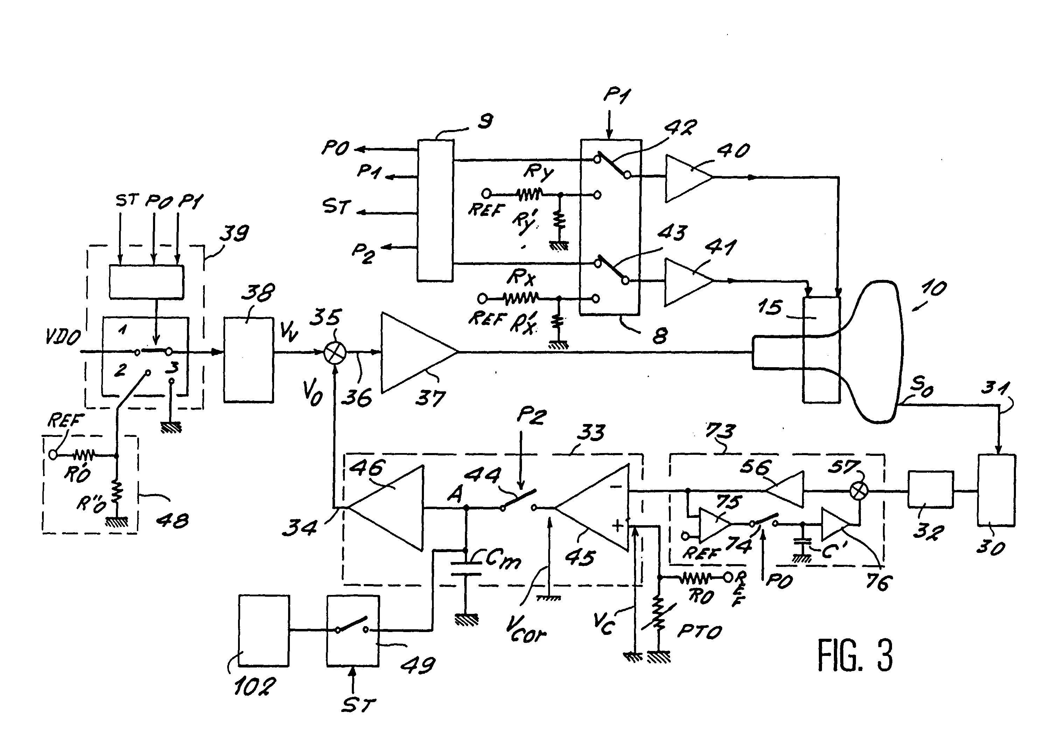

A cette zone Sₒ est associé un capteur photoélectrique 30 (figure 3), du type diode photoconductrice ou similaire, qui fournit un signal électrique représentatif de la luminance d'un point de la zone Sₒ. Bien entendu, le capteur 30 peut être à proximité immédiate de la zone Sₒ ou en être éloigné et, dans ce cas, lui être relié par une fibre optique 31 comme le montre la figure 3.

Le capteur de luminance 30 doit présenter les caractéristiques suivantes:
- sa sensibilité doit être maximale pour la longueur d'onde du luminophore Lo;
- sa surface doit être suffisamment grande pour augmenter l'énergie reçue et faciliter le problème de son positionnement;
- sa capacité parasite doit être suffisamment faible pour que la bande passante du système de détection permette d'effectuer la mesure rapidement.

Le signal électrique fourni par le capteur 30 est appliqué à un préamplificateur 32 dont le signal de sortie est appliqué à un circuit 73 qui élimine du signal la composante due au courant d'obscurité du capteur 30.

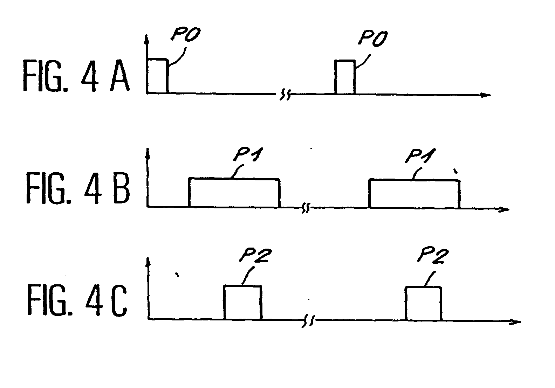

A cet effet, le circuit 73 échantillonne la valeur du courant d'obscurité pendant une phase PO (figure 4a) et cette valeur échantillonnée est mémorisée pendant le reste du temps pour être déduite du signal venant du préamplificateur 32.

Le circuit 73 peut être réalisé de différentes manières et, notamment, selon le schéma indiqué à l'intérieur du rectangle 73. Il comprend un amplificateur 56 dont la boucle de contre-réaction est constituée d'un circuit échantillonneur-bloqueur et d'un circuit soustracteur 57. Le circuit échantillonneur-bloqueur comprend un premier amplificateur 75 dont une borne d'entrée est connectée à la borne de sortie de l'amplificateur 56 et dont l'autre borne d'entrée est connectée à une source de tension de référence REF. La borne de sortie de ce premier amplificateur est connectée à une borne d'un condensateur mémoire C′ par l'intermédiaire d'un interrupteur 74, l'autre borne étant connectée à la masse. Un amplificateur 76 connecte le condensateur C′ au circuit soustracteur 57. L'ouverture et la fermeture de l'interrupteur 74 sont commandées par le signal de phase PO (figure 4a).

Le signal de sortie du circuit 73 est appliqué à un échantillonneur-bloqueur 33 pour être comparé,dans un comparateur amplificateur d'erreur 45, à une consigne de luminance Vc qui est ajustée à l'aide d'un diviseur de tension résistif connecté entre une source de tension REF et la masse et comportant une résistance RO et un potentiomètre PTO. Cet échantillonneur-bloqueur 33 comprend, notamment, le comparateur amplificateur d'erreur 45 qui effectue cette comparaison et fournit sur sa borne de sortie, une tension de correction Vcor qui permettra, comme on le décrira plus loin, d'augmenter ou de diminuer la tension de blocage du tube pendant la phase P2 d'échantillonnage (figure 4c).

Par la fermeture d'un interrupteur 44 pendant cette phase P2, cette tension de correction Vcor est mémorisée dans un condensateur Cm pendant tout le reste du temps où l'interrupteur 44 reste ouvert.

L'étage de sortie de l'échantillonneur-bloqueur 33 est constitué par un amplificateur 46 dont la borne de sortie 34 est à une tension Vₒ qui est égale à la tension de charge du condensateur Cm en un point A (borne A).

La tension Vₒ est soustraite d'une tension Vv correspondant à un signal vidéo VDO dans un circuit soustracteur 35 dont la borne de sortie 36 est connectée à la cathode du tube cathodique 10 par l'intermédiaire d'un amplificateur 37.

Le signal vidéo VDO est appliqué au circuit soustracteur 35 par l'intermédiaire d'un circuit correcteur 38, plus connu sous le nom de circuit correcteur de gamma, qui a pour effet de linéariser la luminance de l'écran en fonction du signal de commande de luminance constitué par le signal vidéo VDO.

En outre, selon l'invention, le courant vidéo VDO n'est pas appliqué en permanence au circuit correcteur de gamma par suite de l'interposition d'un commutateur à trois positions 39 qui permet de connecter le correcteur de gamma 38 et, par suite, le circuit soustracteur 35 :
- soit au signal vidéo VDO en fonctionnement normal (position 1),
- soit à la masse, (position 3) soit à un circuit de référence 48 (position 2) pendant les phases d'asservissement.

Ce circuit de référence 48 comprend un diviseur de tension résistif comportant des résistances R′0 et R˝0, la résistance R′0 étant connectée à une tension de référence REF et la résistance R˝0 étant connectée à la masse.

La commutation du commutateur 39 à la masse est obtenue par le signal de phase P0 (figure 4a) ou par un signal ST lors de la mise sous tension du tube à rayons cathodiques.

La commutation du commutateur 39 vers la borne de sortie du circuit de référence 48 est obtenue par un signal de phase P1 (figure 4b). Les signaux de phase P0 et P1 sont cycliques et peuvent être, par exemple, synchronisés sur les signaux de balayage. Le signal P0 précède le signal P1 sans recouvrement.

Au tube 10 et plus spécialement aux bobines de déviation 15 sont associés de manière connue des amplificateurs de déviation, l'un référencé 40 pour le balayage suivant l'axe des abscisses X′X (figure 5) et l'autre 41 pour le balayage suivant l'axe des ordonnées Y′Y. Ces amplificateurs 40 et 41 reçoivent d'un circuit de balayage 9, des signaux de balayage du type télévision ou cavalier mais reçoivent, en outre, selon l'invention, des signaux de positionnement du faisceau électronique pendant la durée du signal de phase P1 pour diriger ledit faisceau vers la zone Sₒ de l'écran et, plus précisément, en face de l'extrémité de la fibre optique 31.

A cet effet, la borne d'entrée de chaque amplificateur de déviation 40 et 41 est connectée respectivement à un commutateur 42 et 43 d'un circuit de commutation 8, commandé par le signal P1, de manière à recevoir les signaux de balayage pendant la durée de la trame ou du tracé cavalier et à recevoir des signaux de référence pendant le retour de trame ou du temps prévu pour le test pendant le tracé cavalier, c'est-à-dire pendant la durée du signal P1. Sur la figure 3, ces signaux de référence sont matérialisés par un circuit diviseur résistif alimenté par la tension de référence REF et comportant les résistances Rx et R′x pour la déviation X′X et les résistances Ry et R′y pour la déviation Y′Y. La mesure de la luminance de la zone Sₒ de l'écran est effectuée par l'échantillonneur-bloqueur 33 pendant une partie de la durée du signal P1. A cet effet, l'interrupteur 44 de l'échantillonneur-bloqueur 33 est commandé par le signal P2 (figure 4c) qui apparaît pendant P1. Comme le montre la figure 3, ce signal P2 commande la charge du condensateur Cm par l'intermédiaire de l'interrupteur 44 disposé entre le comparateur 45 et la borne A du condensateur Cm dont l'autre borne est connectée à la masse. La tension de charge du condensateur Cm est appliquée au soustracteur 35 comme décrit ci-dessus.

Par ailleurs, la borne A du condensateur C est connectée à une source 102 par un interrupteur 49 commandé par le signal ST de manière à charger le condensateur Cm à une tension déterminée à la mise sous tension du tube 12 et à obtenir un blocage maximum du tube.

Le signal ST, ainsi que les signaux P0, P1 et P2 sont fournis par le circuit du balayage 9.

Pour faire varier le seuil de luminance, le signal fourni par le capteur 30 est comparé, comme décrit précédemment, à une valeur de consigne Vc dans l'amplificateur d'erreur 45; cette valeur de consigne est obtenue par le circuit diviseur résistif connecté entre la tension de référence REF et la masse et comportant la résistance RO et le potentiomètre PTO. Cette valeur Vc est ajustable par l'utilisateur pour régler la luminance de fond de l'écran.

Le fonctionnement du tube est alors le suivant en supposant que le tube est en fonctionnement normal. Cycliquement, par exemple à chaque retour de trame, le signal PO bascule le commutateur 39 à la masse et permet au circuit 73 d'échantillonner le courant d'obscurité du capteur 30 pendant que le courant de faisceau est quasi nul et que le faisceau n'est pas positionné sur la zone S_{O}, c'est-à-dire sur le capteur 30. Le circuit 73 retranchera cette valeur à la mesure d'asservissement qui sera faite par la suite.

Ensuite, le signal P1 commande les commutateurs 42 et 43 pour que le faisceau électronique excite le point de la zone S_{O} situé en face de l'extrémité de la fibre 31; il commande également le commutateur 39 pour que le soustracteur 35 soit connecté, à travers le correcteur de gamma 38 à la source 48 de tension de référence (position 2).

Si la luminance, qui est mesurée par le capteur 30, est supérieure à la valeur de consigne Vc, le condensateur Cm se décharge par exemple pendant la durée du signal P2 et la tension du point A diminue; ceci a pour effet, par l'intermédiaire de l'amplificateur 46 et du soustracteur 35, de diminuer le courant de cathode Ik et donc d'augmenter la différence de potentiels VKG1, ce qui a pour effet de diminuer le courant électronique du tube et donc la luminance du tube.

On comprend que l'effet inverse est obtenu lorsque la luminance qui est mesurée par le capteur 30 est inférieure à la valeur de consigne Vc.

Lors de la mise sous tension du tube, il est important que le tube soit bloqué au maximum et il en résulte que, selon le fonctionnement décrit ci-dessus, la tension du point A doit être minimale : c'est le rôle de la source 102 qui peut être nulle ou négative et qui à la mise sous tension, est connectée au point A par la fermeture de l'interrupteur 49 grâce au signal ST.

Pour la même raison, le signal ST commande le commutateur 39 pour connecter le correcteur de gamma 38 à la masse (position 3).

L'invention a été décrite en prévoyant une mesure de luminance de la zone Sₒ pendant le retour de trame mais il est clair que d'autres instants peuvent être choisis selon les applications du dispositif d'asservissement selon l'invention.

## Revendications

1. Dispositif d'asservissement de la tension de polarisation cathode-wehnelt sur la tension de blocage d'un tube à rayons cathodiques (10) dont l'écran présente au moins une première zone opérationnelle (S) du tube utilisée pour faire apparaître les images et une deuxième zone (S₀) disposée à l'extérieur de la première, ledit dispositif comprenant un capteur de luminance (30) qui est disposé face à la deuxième zone pour mesurer la luminance de la surface associée de la deuxième zone (S₀), des moyens de balayage (8, 9) pour diriger, à chaque retour de trame, le faisceau électronique vers ladite deuxième zone associée au capteur (30) et des moyens pour modifier la tension de polarisation cathode-wehnelt du tube en fonction de la valeur de la mesure de luminance par rapport à une valeur souhaitée, caractérisé en ce que le luminophore (L₀) recouvrant la deuxième zone (S₀) présente un temps de montée à 99 % qui est inférieur, d'au moins un ordre de grandeur, à celui du luminophore de la première zone.

2. Dispositif selon la revendication 1, caractérisé en ce que le temps de montée à 99 % du luminophore (L₀) de la deuxième zone (S₀) est de l'ordre de quelques microsecondes.

3. Dispositif selon la revendication 1 ou 2, caractérisé en ce que le luminophore (L₀) de la deuxième zone (S₀) a une longueur d'onde qui est différente de celle du luminophore de la première zone (S).

4. Dispositif selon la revendication 3, caractérisé en ce que le luminophore (L₀) de la deuxième zone (S₀) a une longueur d'onde dans le domaine de l'invisible.

5. Dispositif selon l'une des revendications précédentes
1 à 4, caractérisé en ce que les moyens pour modifier la tension de blocage du tube comprennent des moyens (45, RO, PO) pour comparer la valeur de mesure de luminance à une valeur souhaitée, des moyens (33) pour échantillonner aux instants choisis le signal résultant de la comparaison et des moyens pour fournir, pendant l'intervalle de temps entre deux instants choisis, un signal de modification de la tension de blocage du tube de manière que la valeur de mesure de luminance soit égale à la valeur souhaitée.

6. Dispositif selon la revendication 5, caractérisé en ce que les moyens d'échantillonnage (33) comprennent un circuit échantillonneur-bloqueur (Cm, 44, 45, 46) qui est commandé par un signal (P2) apparaissant auxdits instants choisis et qui fournit un signal variant en fonction du résultat de la comparaison, ledit signal étant appliqué soit à la cathode, soit au wehnelt du tube.

7. Disposiif selon l'une quelconque des revendications précédentes 1 à 6, caractérisé en ce que le capteur de luminance comprend une fibre optique (31) dont une extrémité est disposée devant la deuxième zone (Sₒ) tandis que l'autre extrémité est associée à une cellule photoélectrique (30).

## Patentansprüche

1. Vorrichtung zur Regelung der Wehnelt-Kathoden-Polarisationsspannung in bezug auf die Sperrspannung einer Kathodenstrahlröhre (10), deren Bildschirm wenigstens einen ersten Wirkungsbereich (S) zur Bilddarstellung für die verwendete Röhre aufweist und einen zweiten Bereich (Sₒ) aufweist, der außerhalb des ersten angeordnet ist, wobei die Vorrichtung einen Luminanzsensor (30) aufweist, der gegenüber dem zweiten Bereich angeordnet ist,, um die Luminanz der dem zweiten Bereich (Sₒ) zugeordneten Fläche zu messen, eine Ablenkanordnung (8, 9) aufweist, um bei jeder Halbbildwiederkehr den Elektronenstrahl zum zweiten dem Sensor (30) zugeordneten Bereich zu richten und eine Anordnung aufweist zur Veränderung der Wehnelt-Kathoden-Polarisationsspannung als Funktion des Meßwertes der Luminanz bezüglich eines gewünschten Wertes, dadurch gekennzeichnet, daß der Leuchtstoff (Lₒ), der den zweiten Bereich (Sₒ) bedeckt, eine Anstiegszeit auf 99 % besitzt, welche um wenigstens eine Größenordnung kleiner ist als diejenige des Leuchtstoffs des ersten Bereichs.

2. Vorrichtung nach Anspruch 1, dadurch gekennzeichnet, daß die Anstiegszeit auf 99 % des Leuchtstoffs (Lₒ) des zweiten Bereichs (Sₒ) in der Größenordnung von einigen Mikrosekunden liegt.

3. Vorrichtung nach Anspruch 1 oder 2, dadurch gekennzeichnet, dadurch gekennzeichnet, daß der Leuchtstoff (Lₒ) des zweiten Bereichs (Sₒ) eine Wellenlänge aufweist, die sich von derjenigen des Leuchtstoffs des ersten Bereichs (S) unterscheidet.

4. Vorrichtung nach Anspruch 3, dadurch gekennzeichnet, daß der Leuchtstoff (Lₒ) des zweiten Bereichs (Sₒ) eine Wellenlänge im unsichtbaren Bereich aufweist.

5. Vorrichtung nach einem der vorhergehenden Ansprüche 1 bis 4, dadurch gekennzeichnet, daß die Anordnung zur Veränderung der Sperrspannung der Röhre eine Anordnung (45, RO, PO) aufweist, um den Meßwert der Luminanz mit einem gewünschten Wert zu vergleichen, eine Anordnung (33) aufweist, um zu ausgewählten Zeitpunkten das durch den Vergleich erhaltene Signal abzunehmen und eine Anordnung aufweist, um während Zeitintervallen zwischen zwei ausgewählten Zeitpunkten ein Veränderungssignal für die Sperrspannung der Röhre dergestalt zu liefern, daß der Meßwert der Luminanz auf den gewünschten Wert geregelt wird.

6. Vorrichtung nach Anspruch 5, dadurch gekennzeichnet, daß die Abnahmeanordnung (33) einen Abnahme-Blockier-Schaltkreis (Cm, 44, 45, 46) aufweist, welcher durch ein Signal (P2) gesteuert wird, das zu den ausgewählten Zeitpunkten erscheint und ein Signal liefert, der als Funktion des Vergleichsresultates variiert, wobei das Signal entweder an die Kathode oder an die Wehnelt-Elektrode der Röhre gelegt wird.

7. Vorrichtung nach einem der vorhergehenden Ansprüche 1 bis 6, dadurch gekennzeichnet, daß der Luminanzsensor eine optische Faser (31) aufweist, deren eines Ende vor dem zweiten Bereich (Sₒ) angeordnet ist, während ihr anderes Ende einer photoelektrischen Zelle (30) zugeordnet ist.

## Claims

1. Device for controlling the polarisation voltage for a cathode control grid across the blocking voltage of a cathode ray tube (10), whose screen has at least a first operating zone (S) of the tube used to make images appear, and a second zone (Sₒ) disposed outside the first, the said device having a luminance sensor (30) arranged facing the second zone to measure the luminance of the surface assigned to the second zone (Sₒ), sweeping means (8, 9) for directing the electronic beam, on each return frame, towards the said second zone assigned to the sensor (30) and means for modifying the polarisation voltage of the cathode control grid of the tube depending on the value of the measured luminance relative to a desired value, characterised in that the phosphor (Lₒ) covering the second zone (Sₒ) has a 99% rise time which is lower than that of the phosphor of the first zone by at least one unit of size.

2. Device as claimed in claim 1, characterised in that the 99% rise time of the phosphor (Lₒ) of the second zone (Sₒ) is several microseconds.

3. Device as claimed in claim 1 or 2, characterised in that the phosphor (Lₒ) of the second zone (Sₒ) has a wave length which is different from that of the phosphor of the first zone (S) .

4. Device as claimed in claim 3, characterised in that the phosphor (Lₒ) of the second zone (Sₒ) has a wave length in the invisible range.

5. Device as claimed in one of the previous claims 1 to 4, characterised in that the means for modifying the blocking voltage of the tube has means (45, RO, RP) for comparing the measured value of luminance with a desired value, means (33) for sampling the signal resulting from the comparison at selected instants and means for supplying, during the time interval between two selected instants, a signal to modify the blocking voltage of the tube so that the measured luminance value is equal to the desired value.

6. Device as claimed in claim 5, characterised in that the sampling means (33) have a sampler-blocker circuit (Cm, 44, 45, 46) which is controlled by a signal (P2) appearing at the said selected instants and which supplies a signal that varies in accordance with the result of the comparison, the said signal being applied either to the cathode or the control grid of the tube.

7. Device as claimed in any one of the previous claims 1 to 6, characterised in that the luminance sensor has an optical fibre (31), one end of which is arranged in front of the second zone (Sₒ) whilst the other end is connected to a photoelectric cell (30).
